# EUROPEAN PATENT APPLICATION

(11) **EP 4 744 763 A1**
(43) Date of publication of application: **20.05.2026**
(21) Application number: 25205102.4
(22) Date of filing: 26.09.2025
(51) Int. Cl.: B01F 23/53, B01F 23/50, B01F 25/50, B01F 25/52, B01F 27/81, B01F 31/85, B01F 35/21

(54) **VISCOSITY CONTROL APPARATUS FOR ELECTRODE SLURRY AND COATING APPARATUS FOR ELECTRODE SLURRY USING THE SAME**

(30) Priority: 15.11.2024 KR 20240163546
(71) Applicant: SAMSUNG SDI CO., LTD., Yongin-si, Gyeonggi-do 17084 (KR)
(72) Inventor: SOHN, Myungbeom, 17084 Yongin-si (KR); JUN, Pilgoo, 17084 Yongin-si (KR); SON, Taeyoung, 17084 Yongin-si (KR); YOU, Yongchan, 17084 Yongin-si (KR)
(74) Representative: Marks & Clerk LLP

(57) **Abstract**

A viscosity control apparatus for an electrode slurry, includes a mixing unit (10) configured to stir an electrode slurry, a dispersion unit (20) into which the electrode slurry is introduced, and which is configured to disperse a material contained in the electrode slurry and re-supply a dispersed slurry to the mixing unit, a first circulation line (11) going from the mixing unit to the dispersion unit and, via a separate path, from the dispersion unit back to the mixing unit, and configured to connect the mixing unit and the dispersion unit to circulate the electrode slurry, a viscosity measurement unit (30) connected to the first circulation line so that the electrode slurry having passed through the dispersion unit is introduced and configured to measure a viscosity of the electrode slurry, and a control unit (40) configured to receive a signal of the viscosity measurement unit, and control the dispersion unit to re-operate to re-disperse the electrode slurry and supply the redispersed electrode slurry to the mixing unit when the viscosity of the electrode slurry is not a value in a predetermined range.

## Description

### BACKGROUND

### 1. Field

The present disclosure relates to a viscosity control apparatus for an electrode slurry and a coating apparatus for an electrode slurry using the same capable of improving coating quality by appropriately adjusting the viscosity of an electrode slurry.

### 2. Description of the Related Art

A lithium rechargeable battery electrode may be composed of a current collector, an active material, a conductive agent, and a binder. The lithium rechargeable battery electrode may be implemented by coating a homogeneously mixed active material, a conductive material, and a binder on a current collector.

This coating method may involve applying an electrode slurry composed of an active material, a conductive material, a binder, and a solvent onto a moving current collector through a slot die based on a roll-to-roll method. Subsequently, the solvent may be vaporized through drying, thereby leaving only the solid active material, conductive material, and binder on the current collector.

At this time, when an appropriate weight of active material, conductive material, and binder per unit area is applied on the entire collector, the target electrode performance may be obtained.

When the amount of coating applied is not uniform, the thickness of the electrode becomes non-uniform, which may cause defects such as active material detachment, cracks, and meandering in subsequent processes such as pressing and slitting, and may reduce the structural stability of a jelly-roll type electrode assembly as a wound structure or a stack type or folding type electrode assembly in which a plurality of electrodes are laminated. In addition, capacity dispersion between cells may occur, which may result in deterioration of life-span characteristics and safety.

### SUMMARY

The present disclosure provides a viscosity control apparatus for an electrode slurry and a coating apparatus for an electrode slurry using the same, capable of improving the coating quality by preventing the flow amount of the electrode slurry from abruptly change by appropriately adjusting the viscosity of the electrode slurry.

Embodiments are directed to a viscosity control apparatus for an electrode slurry, including a mixing unit configured to stir an electrode slurry, a dispersion unit into which the electrode slurry is introduced, and which is configured to disperse a material contained in the electrode slurry and re-supply a dispersed slurry to the mixing unit, a first circulation line going from the mixing unit to the dispersion unit and, via a separate path, from the dispersion unit back to the mixing unit, and configured to connect the mixing unit and the dispersion unit to circulate the electrode slurry, a viscosity measurement unit connected to the first circulation line so that the electrode slurry having passed through the dispersion unit is introduced and configured to measure a viscosity of the electrode slurry, and a control unit configured to receive a signal of the viscosity measurement unit, and control the dispersion unit to re-operate to re-disperse the electrode slurry and supply the re-dispersed electrode slurry to the mixing unit when the viscosity of the electrode slurry is not a value in a predetermined range.

The mixing unit may include a storage tank, and an impeller inside the storage tank.

The dispersion unit may include a circulation pump on the first circulation line, and a dispersion device connected to the first circulation line.

The dispersion device may include a static mixer, a homo mixer, or an ultrasonic homogenizer.

The viscosity measurement unit may include a pipe connected to the first circulation line, and a measuring instrument connected to the pipe.

The measuring instrument may include a vibrational viscometer, a rotational viscometer, a Coriolis flowmeter, or a differential pressure sensor.

The control unit may be configured to receive a viscosity measurement value of the electrode slurry from the measuring instrument, and determine whether the viscosity measurement value is in a predetermined range of viscosity value, re-operate the dispersion unit to disperse the electrode slurry when the viscosity measurement value is not in the predetermined range of viscosity value, re-measure the viscosity of the electrode slurry by using the measuring instrument, and re-determine whether the viscosity measurement value of the electrode slurry is in the predetermined range of viscosity value, and derive the viscosity measurement value as an optimal viscosity when the viscosity measurement value is in a predetermined range of measurement value.

When the viscosity measurement value is in a predetermined range of viscosity values, the viscosity measurement value may be determined to be at an optimal viscosity.

Embodiments are directed to a coating apparatus for an electrode slurry, including, a mixing unit configured to stir an electrode slurry, a dispersion unit into which the electrode slurry is introduced, and which is configured to disperse a material contained in the electrode slurry and re-supply a dispersed slurry to the mixing unit, a first circulation line going from the mixing unit to the dispersion unit and, via a separate path, from the dispersion unit back to the mixing unit and configured to connect the mixing unit and the dispersion unit to circulate the electrode slurry, a viscosity measurement unit connected to the first circulation line so that the electrode slurry having passed through the dispersion unit is introduced and configured to measure a viscosity of the electrode slurry, a control unit configured to receive a signal of the viscosity measurement unit and control the dispersion unit to re-operate to re-disperse the electrode slurry and supply the re-dispersed electrode slurry to the mixing unit when the viscosity of the electrode slurry is not a normal viscosity that is in a predetermined range, and a discharge portion connected to the mixing unit and configured to discharge and coat the electrode slurry of a normal viscosity on an electrode plate.

The mixing unit may include a storage tank, and an impeller inside the storage tank.

The dispersion unit may include a circulation pump on the first circulation line, and a dispersion device connected to the first circulation line.

The dispersion device may include a static mixer, a homo mixer, or an ultrasonic homogenizer.

The viscosity measurement unit may include a pipe connected to the first circulation line, and a measuring instrument connected to the pipe.

The measuring instrument may include a vibrational viscometer, a rotational viscometer, a Coriolis flowmeter, or a differential pressure sensor.

The discharge portion may include a discharge pump, a second circulation line going from the mixing unit to the discharge pump and, via a separate path, from the discharge pump back to the mixing unit, a discharge line connected to the second circulation line by a supply control valve, and a sprayer connected to the discharge line.

The sprayer may be a slot die coater including a slot for discharging the electrode slurry.

The coating apparatus according to some embodiments may further include a coating quality measuring instrument.

According to an embodiment, it is possible to maintain an appropriate coating by automatically adjusting the viscosity of the electrode slurry when there occurs a defect in the coating quality of the electrode slurry on the electrode plate, thereby improving the coating quality of the electrode plate.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a block diagram schematically showing a viscosity control apparatus for an electrode slurry according to an embodiment.
FIG. 2 is a cross-sectional side view schematically showing a mixing unit according to an embodiment.
FIG. 3 is a drawing schematically showing a dispersion unit according to an embodiment.
FIG. 4 is a drawing schematically showing a viscosity measurement unit according to an embodiment.
FIG. 5 is a block diagram schematically showing a coating apparatus for an electrode slurry according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout. As used herein, the term "or" is not an exclusive term, e.g., "A or B" would include A, B, or A and B

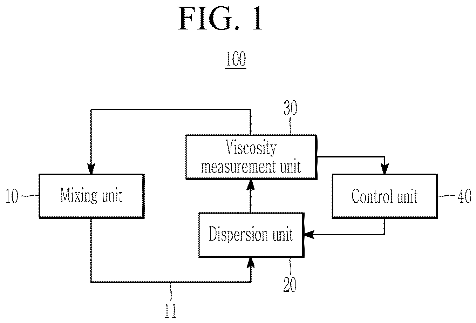

FIG. 1 is a block diagram schematically showing a viscosity control apparatus 100 for an electrode slurry according to an embodiment.

As shown in FIG. 1, the slurry viscosity control apparatus 100 may include a mixing unit 10 configured to stir the electrode slurry, a dispersion unit 20 into which the electrode slurry is introduced and which is configured to disperse a material contained in the electrode slurry and re-supply the dispersed slurry to the mixing unit 10, a first circulation line 11 configured to connect the mixing unit 10 and the dispersion unit 20 to circulate the electrode slurry, a viscosity measurement unit 30 connected to the first circulation line 11 so that the electrode slurry, having passed through the dispersion unit 20, is introduced and configured to measure the viscosity of the electrode slurry, a control unit 40 configured to receive a signal from the viscosity measurement unit 30 and control the dispersion unit 20 to re-operate to re-disperse the electrode slurry and supply the re-dispersed electrode slurry to the mixing unit 10 when the viscosity of the electrode slurry is not a value in a predetermined, e.g., preset, range. For example, as may be seen in FIG. 1, the first circulation line 11 may go from the mixing unit 10 to the dispersion unit 20 and, via a separate path, from the dispersion unit 20 back to the mixing unit 10. Additionally, as may be seen in FIG. 1, the control unit 40 may be connected to the viscosity measurement unit 30 and the dispersion unit 20.

The mixing unit 10 may serve to improve the viscosity uniformity of the slurry, by stirring the electrode slurry to uniformly mix the contents, e.g., an active material, a conductive agent, a binder, a solvent, or the like.

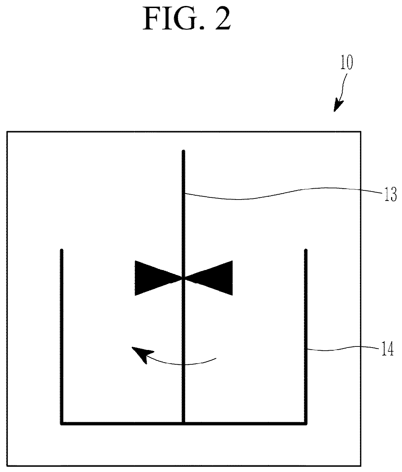

FIG. 2 is a cross-sectional side view schematically showing a mixing unit 10 according to an embodiment.

Referring to FIG. 2, in an implementation, the mixing unit 10 may include a storage tank 14 into which the electrode slurry may be injected, and an impeller 13 inside the storage tank 14 configured to mix the electrode slurry.

The storage tank 14 may have an interior space capable of storing the electrode slurry, and may be on a bottom surface of a workspace.

The storage tank 14 may have, e.g., a rectangular parallelepiped shape or various other shapes including a round shape in a portion. For example, the storage tank 14 may have a round shape. The impeller 13 for mixing the electrode slurry may be inside the storage tank 14.

The impeller 13 may be inside the storage tank 14 and may be rotatable by a driving torque of a drive motor, and may be configured to appropriately mix the electrode slurry according to the rotation due to the torque of the drive motor.

In an implementation, in the mixing unit 10, the electrode slurry including, e.g., an active material, a conductive agent, a binder, or a solvent may be uniformly mixed.

In an implementation, the electrode slurry mixed in the mixing unit 10 may then be moved to the dispersion unit 20.

The mixing unit 10 and the dispersion unit 20 may be connected through the first circulation line 11 so that the electrode slurry may circulate.

The dispersion unit 20 may disperse an aggregate of an active material, a conductive agent, a binder, a solvent, or the like, which may be mixed in the mixing unit 10. The electrode slurry appropriately dispersed in the dispersion unit 20 may be resupplied to the mixing unit 10.

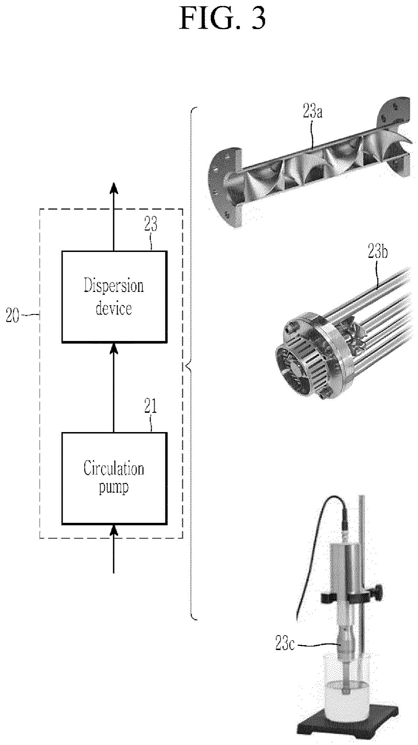

FIG. 3 is a drawing schematically showing a dispersion unit 20 according to an embodiment.

Referring to FIG. 3, in an implementation, the dispersion unit 20 may include a circulation pump 21 on the first circulation line 11 configured to pump the electrode slurry, and a dispersion device 23 configured to receive and disperse the electrode slurry supplied by being pumped by the circulation pump 21. For example, the dispersion device 23 may be connected to the first circulation line 11.

The circulation pump 21 may be on the first circulation line 11 and provide a pumping driving torque enabling the electrode slurry mixed in the mixing unit 10 to move to and circulate through the dispersion unit 20.

The dispersion device 23 may disperse the electrode slurry moved by the pumping driving torque of the circulation pump 21, and in an implementation, may include, e.g., static mixer 23a, a homo mixer 23b, or an ultrasonic homogenizer 23c, or a combination thereof.

That is, the dispersion device 23 may disperse the electrode slurry by using the static mixer 23a, the homo mixer 23b, the ultrasonic homogenizer 23c, or may disperse the electrode slurry by using at least two or more of them in order to improve the dispersion effect.

When the electrode slurry has an appropriate viscosity the contents thereof, e.g., an active material, a conductive agent, a binder, or the like, may be well coated on the electrode current collector. The viscosity of the electrode slurry may be determined by a dispersion-state of the aggregate composed of an active material, a conductive agent, a binder, an additive, or a combination thereof, within the electrode slurry.

In an implementation, the dispersion device 23 may help appropriately disperse the aggregate of the electrode slurry, and may appropriately adjust the viscosity of the electrode slurry. The dispersion device 23 may be repeatedly operated to adjust the viscosity of the electrode slurry so that the viscosity of the electrode slurry becomes a predetermined viscosity. This may be achieved by the viscosity measurements of the viscosity measurement unit 30 and a control operation of the control unit 40, to be described later.

The viscosity measurement unit 30 may measure whether the electrode slurry dispersed in the dispersion unit 20 has a viscosity in a predetermined range.

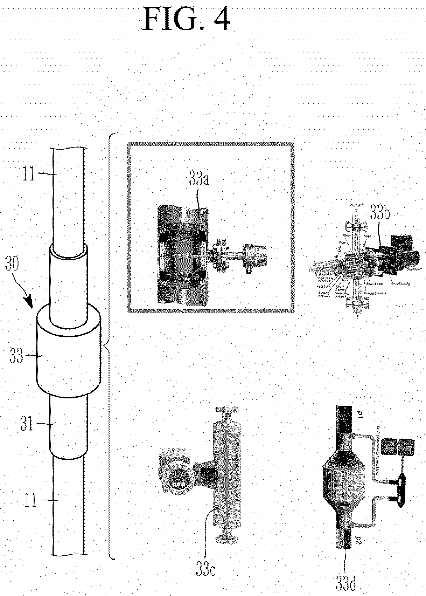

FIG. 4 is a drawing schematically showing a viscosity measurement unit 30 according to an embodiment.

Referring to FIG. 4, in an implementation, the viscosity measurement unit 30 may include a pipe 31 connected to the first circulation line 11 and configured to receive the electrode slurry, and a measuring instrument 33 connected to the pipe 31 and configured to measure the viscosity of the electrode slurry.

The pipe 31 may be connected to the first circulation line 11 so that the electrode slurry having passed through the dispersion unit 20 may be introduced into the measuring instrument 33.

The measuring instrument 33 may be connected to the pipe 31 and may measure the viscosity of the electrode slurry and transmit the measured value to the control unit 40.

The measuring instrument 33 may include, e.g., a vibrational viscometer 33a, a rotational viscometer 33b, a Coriolis flowmeter 33c, or a differential pressure sensor 33d.

In an implementation, measuring the viscosity of the electrode slurry by the viscosity measurement unit 30 may help appropriately maintain the viscosity of the electrode slurry.

The control unit 40 may receive a viscosity measurement signal of the electrode slurry from the viscosity measurement unit 30, to check whether the viscosity of the electrode slurry is in a predetermined range, and when it is not in the predetermined range, the control unit 40 may control the dispersion unit 20 to re-operate to appropriately maintain the viscosity of the electrode slurry. Such a method of operating the viscosity control apparatus according to some embodiments is laid out in detail below.

First, a viscosity measurement value of the electrode slurry is received from the measuring instrument 33, and whether it is in the predetermined range of viscosity values is checked. If the viscosity measurement value is in the predetermined range of viscosity values, the viscosity measurement value is determined to be an optimal viscosity.

However, if the viscosity measurement value is not in the predetermined range of viscosity values, the dispersion unit 20 is re-operated to further disperse the electrode slurry. That is, since the viscosity of the electrode slurry is determined according to the dispersion-state, the dispersion unit 20 is re-operated to adjust the electrode dispersion-state of the aggregate composed of an active material, a conductive agent, a binder, an additive, or a combination thereof, within the slurry.

Subsequently, the viscosity of the electrode slurry is re-measured using the measuring instrument 33, and whether the viscosity measurement value of the electrode slurry is in the predetermined range of viscosity values is re-determined. If the viscosity measurement value is in the predetermined range of measurement values, the viscosity measurement value is derived as, e.g., determined to be, an optimal viscosity.

As described above, according to a viscosity control apparatus 100 for an electrode slurry of the present embodiment, it may be possible to appropriately maintain the viscosity of the electrode slurry in the predetermined range of viscosities, and it may be possible to improve the coating quality of the electrode.

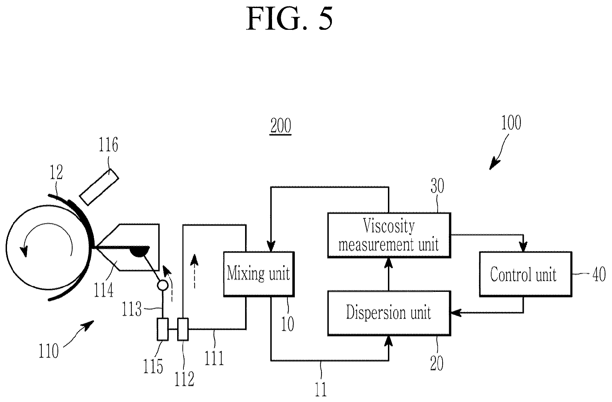

FIG. 5 is a block diagram schematically showing a coating apparatus 200 for an electrode slurry according to an embodiment. The reference numerals that are the same as in FIG. 1 to FIG. 4 indicate the same or similar member having the same or similar function. Hereinafter, to avoid redundancy, reference numerals that are the same as in FIG. 1 to FIG. 4 are not described in detail.

As shown in FIG. 1 to FIG. 5, the coating apparatus 200 may include the mixing unit 10 configured to stir the electrode slurry, the dispersion unit 20 into which the electrode slurry may be introduced and which may be configured to disperse the material contained in the electrode slurry and re-supply the dispersed slurry to the mixing unit 10, the first circulation line 11 connecting the mixing unit 10 and the dispersion unit 20 configured to circulate the electrode slurry, the viscosity measurement unit 30 connected to the first circulation line 11 so that the electrode slurry having passed through the dispersion unit 20 may be introduced and configured to measure the viscosity of the electrode slurry, the control unit 40 configured to receive the signal of the viscosity measurement unit 30 and control the dispersion unit 20 to re-operate to re-disperse the electrode slurry and supply the re-dispersed electrode slurry to the mixing unit 10 when the viscosity of the electrode slurry is not a value in the predetermined range, and a discharge portion 110 connected to the mixing unit 10 and configured to discharge and coat the electrode slurry of a normal viscosity on an electrode plate.

The discharge portion 110 may include a second circulation line 111 connected to the mixing unit 10 through which the electrode slurry of a normal viscosity circulates, a discharge pump 112 on the second circulation line 111 and may be configured to provide the pumping driving torque for circulation of the electrode slurry, a discharge line 113 connected to the second circulation line 111 by a supply control valve 115, and a sprayer 114 connected to the discharge line 113 and configured to spray the electrode slurry on an electrode plate 12. For example, as shown in FIG. 5, the second circulation line 111 may go from the mixing unit 10 to the discharge pump 112 and, via a separate path, from the discharge pump 112 back to the mixing unit 10.

In an implementation, the second circulation line 111 may be between the mixing unit 10 and the sprayer 114 so that the electrode slurry stored in the mixing unit 10 may be movable to the sprayer 114.

The discharge pump 112 for circulation and pumping of the electrode slurry may be installed on the second circulation line 111.

The electrode slurry pumped by an operation of the discharge pump 112 may move to the discharge line 113.

In an implementation, the discharge line 113 may be connected to the second circulation line 111 by the supply control valve 115 and the electrode slurry may move to the sprayer 114 by an operation of the opening and closing of the supply control valve 115.

The sprayer 114 may be connected to the discharge line 113 and may spray the electrode slurry in a direction toward the electrode plate 12.

The sprayer 114 may be, e.g., a slot die coater in which a slot for discharging the electrode slurry may be formed.

In an implementation, a coating quality measuring instrument 116 may be installed in the vicinity of the discharge portion 110.

The coating quality measuring instrument 116 may measure the quality of coating the electrode slurry discharged from the discharge portion 110 on electrode plate, and may transmit the measurement value to the control unit 40.

The coating quality measuring instrument 116 may measure the coating quality based on, e.g., a weight per unit area (i.e., loading level (L/L)) of an active material layer applied on the substrate of the electrode plate 12, the thickness of the slurry coating layer before drying, or the thickness of the active material layer after drying.

When the coating quality of the electrode slurry on the electrode plate 12 is measured using the coating quality measuring instrument 116 and deemed to be unsuitable, a viscosity measurement of the electrode slurry may be performed using the viscosity measurement unit 30.

That is, the measurement signal of the coating quality measuring instrument 116 may be transmitted to the control unit 40, when the coating quality of the electrode slurry is confirmed to be defective and a viscosity measurement using the viscosity measurement unit 30 may be performed by the control operation of the control unit 40.

Therefore, when the coating quality evaluation result through the coating quality measuring instrument 116 does not reach the target coating quality, an additional dispersion of the electrode slurry may be performed through the dispersion unit 20 to appropriately adjust the viscosity of the electrode slurry.

As described above, according to a coating apparatus for an electrode slurry 200 of the present embodiment, when the coating quality of the electrode slurry on the electrode plate 12 is defective, it may be possible to automatically adjust the viscosity of the electrode slurry in order to achieve the appropriate coating, thereby improving the coating quality of the electrode plate.

By way of summation and review, if the amount of coating applied to the current collector is not uniform, the thickness of the electrode becomes non-uniform, which may cause defects such as active material detachment, cracks, and meandering in subsequent processes such as pressing and slitting, and may reduce the structural stability of a jelly-roll type electrode assembly as a wound structure or a stack type or folding type electrode assembly in which a plurality of electrodes are laminated.

In addition, capacity dispersion between cells may occur, which may result in deterioration of life-span characteristics and safety. Therefore, it is important to develop a technology that can help maintain the flow rate of slurry discharged through a slot die without abrupt changes depending on the coating speed in order to obtain a uniform electrode having a target weight per unit area (loading level).

Embodiments of the present disclosure provide a viscosity control apparatus for an electrode slurry and a coating apparatus for an electrode slurry using the same, capable of improving the coating quality by preventing the flow amount of the electrode slurry from abrupt change by appropriately adjusting the viscosity of the electrode slurry.

According to an embodiment, it may be possible to maintain an appropriate coating by automatically adjusting the viscosity of the electrode slurry when a defect in the coating quality of the electrode slurry on the electrode plate occurs, thereby improving the coating quality of the electrode plate.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A viscosity control apparatus for an electrode slurry, comprising:
a mixing unit configured to stir an electrode slurry;
a dispersion unit into which the electrode slurry is introduced, and which is configured to disperse a material contained in the electrode slurry and re-supply a dispersed slurry to the mixing unit;
a first circulation line going from the mixing unit to the dispersion unit and, via a separate path, from the dispersion unit back to the mixing unit, and configured to connect the mixing unit and the dispersion unit to circulate the electrode slurry;
a viscosity measurement unit connected to the first circulation line so that the electrode slurry having passed through the dispersion unit is introduced and configured to measure a viscosity of the electrode slurry; and
a control unit configured to receive a signal of the viscosity measurement unit, and control the dispersion unit to re-operate to re-disperse the electrode slurry and supply the re-dispersed electrode slurry to the mixing unit when the viscosity of the electrode slurry is not a value in a predetermined range.

2. The viscosity control apparatus as claimed in claim 1, wherein the mixing unit includes:
a storage tank, and
an impeller inside the storage tank.

3. The viscosity control apparatus as claimed in claim 1 or 2, wherein the dispersion unit includes:
a circulation pump on the first circulation line, and
a dispersion device connected to the first circulation line.

4. The viscosity control apparatus as claimed in claim 3, wherein the dispersion device includes a static mixer, a homo mixer, or an ultrasonic homogenizer.

5. The viscosity control apparatus as claimed in any preceding claim, wherein the viscosity measurement unit includes:
a pipe connected to the first circulation line, and
a measuring instrument connected to the pipe.

6. The viscosity control apparatus as claimed in claim 5, wherein the measuring instrument includes a vibrational viscometer, a rotational viscometer, a Coriolis flowmeter, or a differential pressure sensor.

7. The viscosity control apparatus as claimed in claim 6, wherein the control unit is configured to:
receive a viscosity measurement value of the electrode slurry from the measuring instrument, and determine whether the viscosity measurement value is in a predetermined range of viscosity value;
re-operate the dispersion unit to disperse the electrode slurry when the viscosity measurement value is not in the predetermined range of viscosity value;
re-measure the viscosity of the electrode slurry by using the measuring instrument, and re-determine whether the viscosity measurement value of the electrode slurry is in the predetermined range of viscosity value; and
derive the viscosity measurement value as an optimal viscosity when the viscosity measurement value is in the predetermined range of viscosity value.

8. The viscosity control apparatus as claimed in claim 7, wherein when the viscosity measurement value is in the predetermined range of viscosity values, the viscosity measurement value is determined to be at an optimal viscosity.

9. A coating apparatus for an electrode slurry, comprising:
the viscosity control apparatus according to any preceding claim;
and
a discharge portion connected to the mixing unit and configured to discharge and coat the electrode slurry on an electrode plate when the electrode slurry has a value within the predetermined range.

10. The coating apparatus as claimed in claim 9, wherein the discharge portion includes:
a discharge pump,
a second circulation line going from the mixing unit to the discharge pump and, via a separate path, from the discharge pump back to the mixing unit,
a discharge line connected to the second circulation line by a supply control valve, and
a sprayer connected to the discharge line.

11. The coating apparatus as claimed in claim 10, wherein the sprayer is a slot die coater including a slot for discharging the electrode slurry.

12. The coating apparatus as claimed in claim 9, 10 or 11, further comprising a coating quality measuring instrument.
